# EUROPÄISCHE PATENTSCHRIFT

(11) **EP 1 873 505 B1**
(45) Veröffentlichungstag und Bekanntmachung des Hinweises auf die Patenterteilung: **20.02.2019**
(21) Anmeldenummer: 07012442.5
(22) Anmeldetag: 26.06.2007
(51) Int. Cl.: G02B 21/16, G01J 1/42, G01J 1/44, G02B 21/00

(54) **Verfahren und Anordnung zur Detektierung von Lichtsignalen**
Method and assembly for detecting light signals
Procédé et agencement destinés à la détection de signaux lumineux

(30) Priorität: 01.07.2006 DE 102006030530
(43) Veröffentlichungstag der Anmeldung: 02.01.2008
(73) Patentinhaber: Carl Zeiss Microscopy GmbH, 07745 Jena (DE)
(72) Erfinder: Möhler, Gunter, 04720 Mochau (DE); Liedtke, Mirko, 07745 Jena (DE); Schmidt, Dietmar, 07768 Bibra (DE)

(56) Entgegenhaltungen:
- EP-A- 1 308 715
- DE-A1- 10 253 108
- US-A1- 2004 264 765

## Beschreibung

Die Erfindung betrifft ein Verfahren zur Detektierung von Lichtsignalen, bei dem ein Lichtsignal auf einen optoelektronischen Wandler trifft, wo es in ein elektrisches Signal umgewandelt wird, und bei dem das elektrische Signal im Anschluß an die Umwandlung auf mehrere Auswertekanäle aufgeteilt wird. In jedem Auswertekanal wird dabei (i) eine Signalauswertung durchgeführt, die von den Signalauswertungen für die anderen Auswertekanäle verschieden ist und (ii) ein Ergebnissignal erzeugt. Die Erfindung bezieht sich auf das Problem, daß bei optischen Untersuchungsmethoden, insbesondere in der Mikroskopie, viele verschiedene Arten von Detektierungsverfahren verwendet werden können, wobei jedes dieser Verfahren Vorzüge und Nachteile hat und manche der Verfahren nur bei speziellen Untersuchungsmethoden sinnvoll einsetzbar sind, weshalb man die Detektierungsverfahren gern wechselweise oder zusammen einsetzt. Die Erfindung betrifft außerdem ein Detektormodul zur Detektierung und Auswertung von Lichtsignalen sowie die Verwendung eines solchen Detektormoduls in einem Laser-Scanning-Mikroskop.

In der Mikroskopie, insbesondere in der Laser-Scanning-Mikroskopie gibt es eine Vielzahl verschiedener Untersuchungsmethoden, die jeweils ein auf das Untersuchungsverfahren abgestimmtes Detektierungsverfahren benötigen. Jedes dieser Detektierungsverfahren hat seine eigene Charakteristik und ist in der Regel für eine oder mehrere der Untersuchungsmethoden besonders geeignet, für andere hingegen weniger.

Ein weit verbreitetes Verfahren ist beispielsweise die Integration von Signalen innerhalb einer definierten Meßzeit mit anschließender Analog-Digtal-Wandlung. Zur Integration werden üblicherweise Kondensatoren verwendet, die über eine vorgegebene Meßzeit Ladung ansammeln. Lichtsignale werden durch einen optoelektronischen Wandler in elektrische Signale umgewandelt, so daß die in der Meßzeit angesammelte Ladung zur Lichtintensität korrespondiert. Zwischen zwei Integrationsvorgängen muß der Kondensator wieder entladen bzw. gelöscht werden, so daß eine gewisse Totzeit entsteht, in der dann nicht integriert werden kann. Bis zu 30% der gesamten Zeit werden benötigt um den Integrationskondensator zu entladen, in dieser Zeit kann kein Signal detektiert werden, als Folge treten Empfindlichkeitseinbußen auf. Man behilft sich in diesem Fall häufig mit der sogenannten odd/even-Variante. Dabei wird, während der eine Kondensator für den nächsten Integrationsvorgang vorbereitet wird, d.h. seine Ladung gelöscht wird, ein weiterer Kondensator zur Integration benutzt. Diese Integrationsmethode hat einen sehr großen Dynamikbereich, wenn die Integrationszeitkonstanten entsprechend eingestellt werden. Die Empfindlichkeitseinbußen lassen sich bei der odd/even-Variante vermeiden, jedoch treten bei dieser Verfahrensweise Streifen im Bild auf, die durch die Toleranzen der beiden Integratoren und deren Bauteile beim Umschalten entstehen.

Ein weiteres Verfahren ist die Zählung einzelner Photonen. Diese Methode ist sehr empfindlich, hat aber nur einen geringen Dynamikbereich und ist deshalb nur begrenzt einsetzbar. Gleiches gilt für die sogenannte 2D-Photonenzählung, wie sie beispielsweise in der DE 101 10 925 A1 beschrieben wird. Wird ein Photonenvervielfacher, beispielsweise eine Photonenvervielfachungs-Röhre (Photomultiplier-Tube, PMT) als Detektor verwendet, so muß für die Detektierung einzelner Photonen eine möglichst hohe Spannung angelegt werden um ein Signal zu erhalten. Treffen mehrere Photonen gleichzeitig auf den Detektor, so hat dies keinen Einfluß mehr auf die Stärke des Signals, da dieses bereits bei einem Photon maximal ist. Zwischen dem Auftreffen weniger und vieler Photonen besteht daher kein Unterschied mehr, die Dynamik ist also sehr gering.

Ein weiteres, einfach zu realisierendes Verfahren ist das sogenannte Oversampling. Dieses Verfahren ist besonders gut geeignet, um ein veränderliches Signal abzutasten, da das Signal mit einer höheren Abtastfrequenz abgetastet wird, als für die Darstellung der Bandbreite des Signals tatsächlich nötig ist. Auf diese Weise läßt sich während der Meßzeit das Signal-Rausch-Verhältnis beeinflussen.

Neben diesen Standardverfahren werden in der Laser-Scanning-Mikroskopie noch weitere, speziell auf die Untersuchungsmethoden zugeschnittene Detektierungsverfahren verwendet. Bei sogenannten Fluoreszenz-Lebensdauer-Messungen (FLIM) benötigt man ein gepulstes Beleuchtungssystem und eine sehr schnelle digitale Signalverarbeitung im Picosekundenbereich. Die Pulszeit, d.h. der Zeitpunkt, zu dem Moleküle zur Fluoreszenz angeregt werden, spielt dabei eine wichtige Rolle. Aus diesem Grund erfolgt eine Verarbeitung der Signale üblicherweise in verschiedenen Stufen: So findet eine Vorbearbeitung häufig innerhalb eines Detektierungsmoduls statt, während die endgültige Verarbeitung beispielsweise in einem Computer erfolgen kann. Zur Bestimmung der Lebensdauer einer Fluoreszenzanregung muß außerdem die Zeit zwischen Anregung und Detektierung des Signals bestimmt werden.

Ein ähnlich spezielles Detektierungsverfahren wird für fluoreszenz-korrelations-spektroskopische Messungen (FCS-Messungen) verwendet. Dabei werden Bindungseigenschaften von Molekülen innerhalb des vom Laser-Scanning-Mikroskop erfaßten konfokalen Volumens ermittelt. Dazu müssen die Emissionssignale fluoreszierender Moleküle detektiert werden, auch hier spielt der zeitliche Verlauf und Abstand, in dem Signale detektiert werden, eine entscheidende Rolle.

Zur gleichzeitigen oder alternativen Verwendung mehrerer Detektierungsverfahren werden im Stand der Technik verschiedene Lösungen vorgeschlagen. In der DE 103 19 776 A1 wird eine Vorrichtung zur spektralen Selektion und Detektierung von Spektralbereichen eines Lichtstrahls offenbart, bei der der Lichtstrahl in verschiedene - auch spektral unterschiedliche - Teilstrahlen aufgespaltet wird und jeder der Teilstrahlen auf einen anderen Detektor fällt, wobei die Detektoren jeweils unterschiedliche Detektierungseigenschaften aufweisen bzw. verschiedene Detektierungsverfahren umsetzen. Diese Konstruktion ist sehr aufwendig, da für jeden Teilstrahl ein eigener Detektor mit eigenen optoelektronischen Wandler verwendet wird.

Aus einem Artikel von W. Becker et.al., "Proceedings of SPIE", VOL. 4431, S. 94-98 ist ebenfalls ein Verfahren zur Detektierung eines Objektes mit Hilfe eines Laser-Scanning-Mikroskops bekannt. Die Detektierungseinrichtung umfaßt zwei Detektierungskanäle, wobei das Signal vor der Detektierung zunächst optisch auf zwei Kanäle aufgeteilt wird. Jeder der Kanäle verfügt also über einen eigenen optoelektronischen Wandler. An jedem Wandler ist eine eigene Auswerteeinrichtung angeschlossen.

Dem gegenüber stellt die in der DE 102 53 108 B4 vorgestellte Lösung eine Verbesserung dar. Hier wird das Licht von einem einzigen Detektor detektiert, das Detektionssignal wird anschließend mittels Hochpaßfilter und/oder Tiefpaßfilter auf zwei Kanäle verteilt. Gemäß der Offenbarung der DE 102 53 108 B4 sind diese Filter notwendig, um eine saubere Kanaltrennung zu erreichen. In einem der beiden Kanäle werden mit einem Pulsformer Pulse erzeugt, die zu weiteren Auswertung dienen. Das ursprünglich am Eingang des zweiten Kanals anliegende Detektierungssignal muß nicht weiter berücksichtigt werden, so daß der zweite Kanal im wesentlichen als Pulszähler fungiert, wobei auch die zeitlichen Abstände zwischen den Pulsen registriert werden können. Es handelt sich bei dem in der DE 102 53 108 B4 vorgestellten System um einen sehr speziellen Detektor, der nur für bestimmte Problemstellungen - wie beispielsweise FCS-Messungen einsetzbar ist.

Aufgabe der Erfindung ist es daher, ein Verfahren und eine Anordnung zu entwickeln, die ein möglichst breites Einsatzgebiet haben und flexibel an verschiedene Untersuchungsbedingungen, insbesondere in der Mikroskopie und der Laser-Scanning-Mikroskopie, angepaßt werden können.

Diese Aufgabe wird bei einem Verfahren der eingangs beschriebenen Art dadurch gelöst, daß ein Ergebnissignal zur Weiterverarbeitung anhand eines vorgegebenen, variabel einstellbaren Auswahlkriteriums ausgewählt und ausgegeben wird. Wird beispielsweise eine Probe mikroskopisch untersucht, so wird das von der Probe kommende Licht detektiert, wobei unabhängig von der Untersuchungsmethode nach der Aufteilung auf mehrere Kanäle in jedem Kanal eine Auswertung stattfindet. Erst anschließend findet eine Auswahl eines Signals statt. Einem Endnutzer stehen auf diese Weise flexibel auswählbar verschiedene Ergebnissignale zur Verfügung, wobei jedoch ein einziger Detektor im Prinzip genügt. Auch während der Messung bzw. Laufzeit, d.h. online, kann eine Umschaltung zur Auswahl eines oder mehrerer anderer Auswerteprinzipien erfolgen.

Zur Durchführung des erfindungsgemäßen Verfahrens wird ein Detektormodul verwendet. Dieses Detektormodul ist gebildet durch einen optoelektronischen Wandler zur Umwandlung eines Lichtsignals in ein elektrisches Signal. Daran angeschlossen ist eine Aufteilschaltung zur Aufteilung des elektrischen Signals auf mehrere Auswertekanäle. In jedem der Auswertekanäle ist ein Auswertungsmodul vorhanden, das eine Signalauswertung durchführt, die von den Signalauswertungen für die anderen Auswertekanäle verschieden ist. Es wird durch jedes Auswertungsmodul ein Ergebnissignal erzeugt. In dem Detektormodul ist eine Auswahleinheit mit einer ansteuerbaren Anwahlschaltung in Form eines programmierbaren FPGA vorgesehen, in der ein Ergebnissignal zur Weiterverarbeitung anhand eines vorgegebenen, variabel einstellbaren Auswahlkriteriums auswählbar und ausgebbar ist. Dabei weist das Detektormodul eine einzige bidirektionale Schnittstelle in Form einer LVDS-Schnittstelle auf. Das Detektormodul ist über die einzige bidirektionale Schnittstelle mit einer Steuereinheit verbunden. Die LVDS-Schnittstelle dient zur Ausgabe des Ergebnissignals sowie zur Übermittlung des Auswahlkriteriums an die Auswahlschaltung.

Vorteilhaft werden dabei die elektrischen Signale nach der Aufteilung auf mehrere Kanäle individuell verstärkt und/oder gefiltert. Insbesondere bei einer Aufteilung des Signals auf eine Vielzahl paralleler Kanäle sinkt die Amplitude des Signals, was durch eine Verstärkung wieder ausgeglichen werden kann. Darüberhinaus kann jedes Signal individuell in bezug auf die folgende Auswertung stärker, schwächer oder gar nicht verstärkt sowie mit Hochpaß- oder Tiefpaßfilter gefiltert werden.

Die Ergebnissignale werden unter Verwendung eines FPGA (Field Programmable Gate Array) ausgewählt. Die logische Schaltung wird dabei entsprechend des eingestellten Auswahlkriteriums geschaltet, so daß ein Ergebnissignal ausgewählt wird. Eine programmierbare Schaltung wie das FPGA ermöglicht größtmögliche Flexibilität sowie eine schnelle Anpassung an ein geändertes Auswahlkriterium.

Vorteilhaft wird das Ergebnissignal anhand des Auswahlkriteriums dabei automatisch ausgewählt. Ein Benutzer gibt beispielsweise - sofern dies nicht ebenfalls automatisch geschieht - ein Auswahlkriterium vor, dieses wird an die logische Schaltung übermittelt, die dann die Signalkanäle so schaltet, daß das vorgegebene Ergebnissignal ausgewählt und weitergeleitet wird. Selbstverständlich ist auch eine Auswahl der Signale von Hand durch einen Benutzer denkbar.

Erfindungsgemäß wird das Ergebnissignal zur Weiterverarbeitung über eine LVDS-Schnittstelle (Low-Voltage-Differential-Signaling-Schnittstelle) ausgegeben. Über diese Schnittstelle wird auch das Auswahlkriterium an die logische Schaltung übermittelt und diese entsprechend geschaltet. Bei einer LVDS-Schnittstelle werden anstatt der üblichen Grundspannungen, die für digitale Systeme bei etwa 5 Volt liegen, niedrigere Spannungen von etwa 1,2 Volt verwendet. Für die Signalübertragung werden außerdem zwei Leitungen verwendet, wobei die Differenz der Spannungen - etwa 0,3 Volt - für den logischen Zustand entscheidend ist. Die Nachteile klassischer Schnittstellen - wie das Auftreten hochfrequenter elektromagnetischer Wechselfelder bei Spannungs- und Stromänderungen - lassen sich auf diese Weise vermeiden.

Anwendungsgebiet des Verfahrens ist bevorzugt die mikroskopische oder laser-scan-mikroskopische Untersuchung von Proben, wobei von der Probe kommendes Licht detektiert wird. Wie eingangs schon erwähnt, gibt es gerade hier viele verschiedene Untersuchungsverfahren, von denen einige jeweils spezielle Signalauswertungsverfahren benötigen. Zweckmäßig erfolgt hier die Festlegung des Auswahlkriteriums und die Auswahl der jeweiligen Ergebnissignale in Abhängigkeit von der oder den eingestellten Untersuchungsmethoden. Anders ausgedrückt gibt die eingestellte Untersuchungsmethode auch ein Auswahlkriterium oder zumindest einen Teil des Auswahlkriteriums vor. Sind beispielsweise bei dem Verfahren sieben Auswertekanäle mit entsprechenden Signalauswerteverfahren vorgesehen, und wählt ein Benutzer eine spezielle Untersuchungsmethode, die bevorzugt die Signalverarbeitungen der Kanäle 3, 5 oder 6 benötigt, so kann das Auswahlkriterium in einer Folge von sieben binären Ziffern bestehen bzw. einer siebenstelligen Binärzahl, wobei die dritte, fünfte oder sechste Ziffer 1 ist und die anderen Ziffern 0 sind. Diese Sequenz/Zahl kann dann über die Schnittstelle an die logische Schaltung übermittelt werden, welche sich dann so einstellt, daß sie die Signale der Kanäle 3, 5 oder 6 zur Weiterleitung auswählt. Die anderen Signale werden zwar ausgewertet, jedoch nicht weiterverarbeitet.

Ein Benutzer kann dabei selbst vorgeben, welche Untersuchungsmethode er verwenden möchte, beispielsweise durch das Ankreuzen entsprechender Checkboxen in einem Auswahlmenü an einem angeschlossenen PC oder der Steuereinheit des Mikroskops, die Auswahl der Auswerteverfahren und somit die Festlegung des Auswahlkriteriums kann jedoch automatisch erfolgen, wenn - beispielsweise am PC oder der Steuereinheit - eine entsprechende Untersuchungsmethode für eine Probe ausgewählt wird. Aber auch hier ist eine entsprechende händische Auswahl per Menüsteuerung möglich.

Für laser-scan-mikroskopische Anwendungen erfolgt als Signalauswertung mindestens eine Oversampling-Auswertung eine FCS-Auswertung, eine Photonenzähl-Auswertung und eine FLIM-Auswertung. Der Anzahl der vorgesehenen verschiedenen Signalauswertungen sind dabei grundsätzlich keine Grenzen gesetzt, je nach Anwendungszweck des erfindungsgemäßen Verfahrens können mehr Signalauswertungen, beispielsweise eine Integrations-Auswertung, vorgesehen sein.

Als optoelektronischen Wandler verwendet man aufgrund seines breiten Einsatzgebiets bevorzugt einen PMT. Dessen Empfindlichkeit kann je nach angelegter Spannung variabel eingestellt werden, so daß beispielsweise bei höchster Empfindlichkeit einzelne Photonen registriert werden können, aber auch so, daß bei niedriger Empfindlichkeit ausschließlich hohe Intensitäten, die sich deutlich von einem Hintergrundrauschen abheben, registriert werden. Neben einem PMT können als Photonenwandler auch Photodioden oder APD's (Avalanche-Photodioden) auf Halbleiterbasis als verwendet werden. Letztere können ebenfalls als Single-Photon-Avalanche-Photodiode (SPAPD) ausgestaltet werden und eignen sich dann ausschließlich zum Zählen von Photonen, welches sie für einen Einsatz bei FCS-Messungen und Lebensdauermessungen prädestiniert.

Wird das Detektierungssignal optisch auf mehrere Kanäle aufgeteilt, so lassen sich auch mehrere optoelektronische Wandler verwenden, an die jeweils spezifische Signalauswertungen angeschlossen sind. Die Wandler mit ihren Auswerteschaltungen können in einem einzigen Detektormodul integriert sein, in dem beim Eintritt des Lichts zunächst eine optische Strahlaufteilung erfolgt. Die letztendliche Auswahl der Ergebnissignale zur Weiterleitung kann jedoch wieder durch eine einzige FPGA vorgenommen werden.

Die Erfindung umfaßt außerdem auch ein Detektormodul zur Detektierung und Auswertung von Lichtsignalen, welches einen optoelektronischen Wandler zur Umwandlung eines Lichtsignals in ein elektrisches Signal umfaßt, daran angeschlossen eine Aufteilschaltung zur Aufteilung des elektrischen Signals auf mehrere Auswertekanäle, sowie in jedem Auswertekanal ein Auswertungsmodul, welches (i) eine Signalauswertung durchführt, die von den Signalauswertungen für die anderen Auswertekanäle verschieden ist, und (ii) ein Ergebnissignal erzeugt. Bei einem solchen Detektormodul wird die Aufgabe dadurch gelöst, daß eine Auswahleinheit vorgesehen ist, in der ein Ergebnissignale zur Weiterverarbeitung anhand eines vorgegebenen Auswahlkriteriums ausgewählt und ausgegeben wird.

Zunächst wird also ein optisches Signal von einem optoelektronischen Wandler detektiert und in ein elektrisches Signal umgewandelt. Das elektrische Signal wird anschließend auf verschiedene Auswertekanäle aufgeteilt, wozu die Aufteilschaltung vorgesehen ist. Dabei handelt es sich im einfachsten Fall um einen Knoten mit einem Eingang und mehreren Ausgängen. Jeder Ausgang korrespondiert zu einem Auswertekanal. Die Signale der verschiedenen Auswertekanäle werden dann jeweils einem Auswertungsmodul zugeführt. In diesem wird das Signal ausgewertet und entsprechend ein Ergebnissignal erzeugt. Im letzten Schritt wählt die Auswahleinheit ein Ergebnissignal in einer Abhängigkeit von einem vorgegebenen, jedoch variabel einstellbaren Auswahlkriteriums aus und gibt dieses aus.

Ein solches Detektormodul kann dabei so konstruiert sein, daß es bei verschiedenen optischen Untersuchungsgeräten wie Teleskopen, Mikroskopen, Materialprüfungs- und anderen Analysevorrichtungen verwendet werden kann. Das Auswahlkriterium kann beispielsweise durch einen Benutzer bei der Festlegung der Untersuchungsmethode für eine bestimmte Probe festgelegt werden. Eine Auswahl erfolgt über eine Schnittstelle. Verwendet man das Detektormodul beispielsweise in einem Laser-Scanning-Mikroskop, so können die Untersuchungsmethoden über eine angeschlossene Steuereinheit ausgewählt werden. In Abhängigkeit von den ausgewählten Untersuchungsmethoden kann dann das Auswahlkriterium automatisch oder per Hand beispielsweise über eine Menüsteuerung festgelegt und an das Detektormodul übermittelt werden.

Im Gegensatz zum Stand der Technik werden damit mit einem Detektormodul mehrere Auswerteprinzipien gleichzeitig verwirklicht, von denen ein oder mehrere flexibel ausgewählt werden können. Die Auswahl und Umschaltung kann auch während der Messung erfolgen. Da die Aufbereitung der Signale direkt im Detektormodul erfolgt, spielen Signallaufzeiten und Übertragungsbandbreiten nur noch eine untergeordnete Rolle. Da mehrere Messungen gleichzeitig erfolgen können, wird außerdem die Belastung der Probe verringert.

Bevorzugt sind im Detektormodul für einen oder mehrere der Auswertekanäle individuell einstellbare Signalverstärker und/oder Frequenzfilter vorgesehen. Insbesondere bei einer hohen Anzahl von Auswertekanälen ist eine solche Signalverstärkung nach der Aufteilung des Signals sinnvoll, da das Signal durch die Aufteilung geschwächt wurde. Mittels einer Filterung lassen sich weiterhin spezielle Teile des Signals herausfiltern. Diese Filter können selbstverständlich auch in die Auswertungsmodule integriert sein.

Bei der Auswahleinheit des Detektormoduls ist eine ansteuerbare Auswahlschaltung vorgesehen. Durch die Ansteuerung der Auswahlschaltung können flexibel in Abhängigkeit vom Auswahlkriterium Ergebnissignale ausgewählt werden. Erfindungsgemäß ist die Auswahlschaltung dabei als FPGA ausgestaltet. Dabei handelt es sich um einen frei programmierbaren Logikschaltkreis, der durch die Vorgabe des Auswahlkriteriums entsprechend programmiert wird. Wird das Auswahlkriterium geändert, so erfolgt eine Anpassung bzw. Umprogrammierung der Schaltung im FPGA.

Bei der Auswahleinheit ist dabei eine LVDS-Schnittstelle zur Ausgabe der Ergebnissignale sowie zur Übermittlung des Auswahlkriteriums an die Auswahleinheit vorgesehen. Wird das Detektormodul beispielsweise mit einem Laser-Scanning-Mikroskop (LSM) verwendet, so können beispielsweise über eine beim LSM vorgesehene Steuereinheit eine oder mehrere Auswerteverfahren bzw. Ergebnissignale zur Festlegung des Auswahlkriteriums ausgewählt werden. Entsprechend kann dies selbstverständlich auch schon bei der Auswahl der Untersuchungsmethode(n) vorgenommen werden, ohne daß ein Benutzer selbst eingreift. Über die LVDS-Schnittstelle wird dann ein entsprechendes Signal mit dem Auswahlkriterium an die Auswahleinheit übertragen und die Auswahlschaltung entsprechend programmiert, so daß nur Signale von den Auswertungskanälen, deren Auswertungsmodule die ausgewählten Auswertungsverfahren umsetzen, ausgewählt und beispielsweise an einen PC zur graphischen Darstellung weitergeleitet werden.

Als optoelektronischer Wandler ist beim Detektormodul bevorzugt ein PMT (Photomultiplier Tube) vorgesehen. Bei solchen Röhren kann die Spannung, die zur Vervielfachung der Sekundärelektronen dient, über einen großen Bereich eingestellt werden, weshalb sich ein PMT sowohl für hohe Intensitäten als auch für Einzelphotonenmessungen eignet. Alternativ können auch andere Photonenwandler wie Photodioden, APD oder SPAPD verwendet werden.

Es können auch mehrere verschiedene Photonenwandler gleichzeitig im Detektormodul verwendet werden, wobei allerdings dann der Detektierungsstrahl optisch entsprechend aufgeteilt werden muß. Für jeden Wandler kann eine eigene Schaltung zur Aufteilung mit Auswertemodulen vorgesehen sein, aber auch eine Verknüpfung kann vorgesehen sein, so daß beispielsweise erst die Signale des einen Wandlers und dann die Signale eines weiteren Wandlers mit denselben Auswertemodulen verarbeitet werden.

Auch die Verwendung von Zeilendetektoren oder arrayförmigen Detektoren der o.g. Photonenwandler ist möglich, wenn beispielsweise der Detektierungsstrahl vor der Detektierung spektral zerlegt wird. Die einzelnen spektralen Kanäle werden dann nacheinander mit denselben Auswertemodulen ausgewertet, es kann aber auch für jeden spektralen Kanal eine eigene Auswerteschaltung mit verschiedenen Auswertemodulen vorgesehen sein.

Für alle Auswertekanäle ist jedoch eine gemeinsame Auswerteeinheit vorgesehen, es gibt also nur eine einzige Schnittstelle, über die Daten vom Detektormodul weitergeleitet werden.

Für Einsatzzwecke in der Laser-Scanning-Mikroskopie sind als Auswertemodule im Detektormodul ein Oversampling-, ein FCS-, ein Photonenzähl-, und ein FLIM-Modul vorgesehen. Weitere Auswertemodule, beispielsweise ein Integrationsmodul, können selbstverständlich ebenfalls integriert sein bzw. werden. Die oben genannte Aufzählung umfaßt die gebräuchlichsten Auswerteverfahren. Das Detektormodul kann auch so ausgestaltet sein, daß einzelne Auswertemodule ergänzt oder ausgetauscht werden können. Dies ist insbesondere dann vorteilhaft, wenn der zur Verfügung stehende Platz beschränkt ist. Sind die Auswertungsmodule beispielsweise als Steckmodul konfiguriert, so ist ein Austausch ohne aufwendigen Umbau und Neujustierung möglich, da nicht das ganze Detektormodul ausgetauscht wird.

Das erfindungsgemäße Detektormodul eignet sich besonders gut zur Verwendung in einem Laser-Scanning-Mikroskop, da dort verschiedene Untersuchungsmethoden realisiert werden, die jeweils unterschiedliche Signalauswertungsverfahren erfordern. Ein solches Laser-Scanning-Mikroskop, in dem das Detektormodul verwendet wird, verfügt üblicherweise über eine Einstell- oder Steuereinheit, mit der eine oder mehrere Untersuchungsmethoden zur Untersuchung einer Probe ausgewählt werden können. Das Auswahlkriterium wird dann bevorzugt automatisch anhand der eingestellten Untersuchungsmethoden festgelegt und an die Auswahleinheit des Detektors übermittelt. Die Auswahl der Auswertemethoden kann alternativ auch per Hand erfolgen, beispielsweise über eine entsprechende Menüsteuerung über die Steuereinheit des Mikroskops.

Die Erfindung soll im Folgenden anhand eines Ausführungsbeispieles näher erläutert werden. In den dazugehörigen Zeichnungen zeigt
- Fig.1: ein LSM mit einem erfindungsgemäßen Detektormodul,
- Fig.2: das Detektormodul im Detail in einer ersten Stellung der Auswahlschaltung, sowie
- Fig.3: das Detektormodul im Detail in einer zweiten Stellung der Auswahlschaltung.

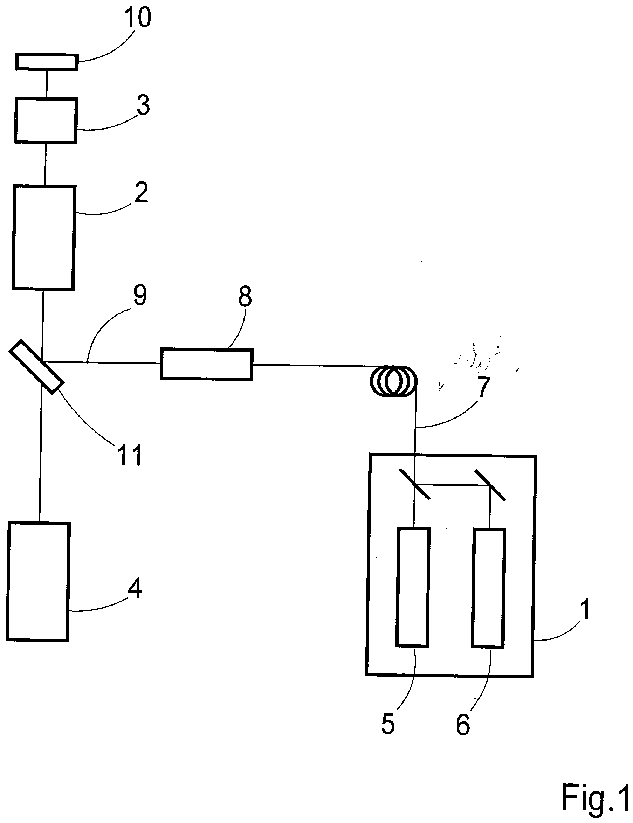

In Fig.1 ist zunächst schematisch der Aufbau eines Laser-Scanning-Mikroskops (LSM) gezeigt. Das LSM besteht im wesentlichen aus fünf Komponenten, nämlich einem Lichtquellenmodul 1, einem Scanmodul 2, einem Mikroskopmodul 3, sowie einem Detektormodul 4. Im Lichtquellenmodul 1 wird Beleuchtungsstrahlung erzeugt. Je nach Anwendung können dazu ein oder mehrere geeignete Lichtquellen vorgesehen sein. Im beispielhaft in Fig.1 gezeigten Lichtquellenmodul 1 sind als Lichtquellen zwei Laser 5, 6 vorgesehen. Licht der Laser 5 und 6 wird in eine Lichtleitfaser 7 über eine nicht gezeigte Koppelstelle eingekoppelt. Vor den Lasern 5 und 6 kann jeweils ein Lichtventil vorgesehen sein, um einen der beiden Laserstrahlen abzuschalten, ohne den Laser ausschalten zu müssen.

In einer Strahlformungseinheit 8 wird die Strahlung verschiedener Wellenlängen zunächst kollimiert und anschließend hinsichtlich des Strahlprofils verändert, so daß der Strahl beim Austreten in einer Profilebene beispielsweise im wesentlichen ein rechteckiges Feld ausleuchtet, wobei die Intensitätsverteilung entlang der Längsachse des rechteckigen Feldes nicht der Verteilung einer Gaußkurve, sondern einer Rechteckkurve entspricht. Im Querschnitt ist dieser zeilenförmige Strahl zur Erzeugung eines rechteckig beleuchteten Feldes geeignet. Der aus der Strahlformungseinheit 8 austretende Strahl dient als Beleuchtungsstrahl 9 zur Beleuchtung einer Probe 10. Der Beleuchtungsstrahl 9 wird dazu über einen Hauptfarbteiler 11 auf und in das Scanmodul 2 abgelenkt. In diesem wird der Beleuchtungsstrahl 9 entsprechend einer Vorschrift abgelenkt, bevor er über das Mikroskopmodul 3 auf die Probe 10 im Fokus eines Objektivs des Mikroskopmoduls 3 gelenkt wird, so daß die Probe 10 abgetastet werden kann. Von der Probe 10 im Fokus abgestrahlte Strahlung, beispielsweise reflektierte Strahlung oder aber auch angeregte Fluoreszenzstrahlung, gelangt über das Mikroskopmodul 3 in das Scanmodul 2 zurück. In diesem wird der zeitlich veränderliche Strahl wieder in einen ruhenden Strahl umgewandelt, die von der Probe kommende Strahlung wird "descannt". Nach Verlassen des Scanmoduls 2 tritt das von der Probe kommende Licht durch den Hauptstrahlteiler 11 hindurch und trifft auf das Detektormodul 4. In diesem wird das von der Probe kommende Licht detektiert und analysiert. Dabei kann im Detektormodul 4 vorgesehen sein, daß Licht verschiedener Wellenlängen spektral selektiv untersucht wird.

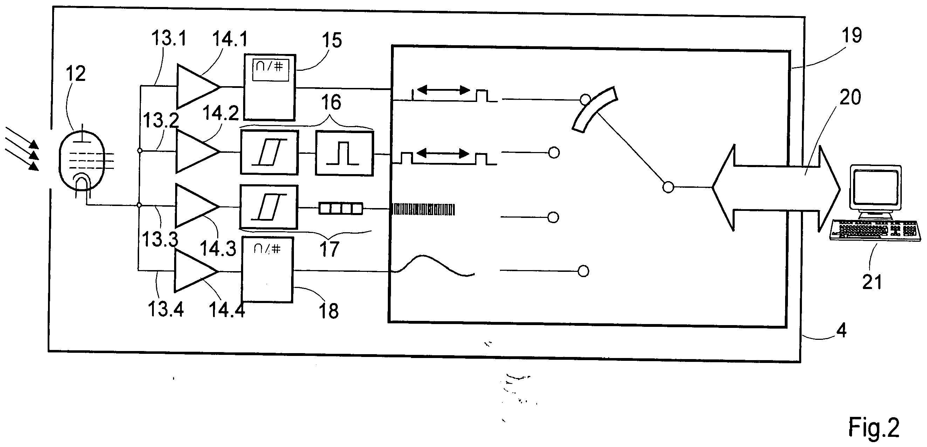

Der Aufbau des Detektormoduls 4 ist beispielhaft in Fig.2 gezeigt. Von links fällt Licht, wie durch die Pfeile angedeutet, auf einen optoelektronischen Wandler, der hier als Pentodenröhre 12 ausgeführt ist. Auch die Verwendung anderer Wandler alternativ oder gleichzeitig ist selbstverständlich möglich, Das von der Pentodenröhre 12 ausgehende elektrische Signal wird auf vier Auswertekanäle 13.1 bis 13.4 aufgeteilt. In jedem dieser Kanäle durchläuft das Signal dann einen entsprechenden Verstärker 14.1 bis 14.4, wobei die Verstärker 14.1, ..., 14.4 individuell angesteuert werden können. Anschließend werdend die elektrischen Signale durch spezifische Auswertemodule 15 bis 18 ausgewertet. Im Beispiel der als wesentlich angesehenen Figur 2 sind vier Module gezeigt, es können aber auch mehr oder weniger vorgesehen sein, oder solche mit anderen Funktionen. Zunächst ist ein FLIM-Modul 15 vorgesehen, mit welchem die Lebensdauer einer Fluoreszenzanregung bei der Probe gemessen werden kann. Ein FCS-Modul 16 wird bei der Fluoreszenz-Korrelations-Spektroskopie eingesetzt. Hier werden im wesentlichen die Zeiten zwischen registrierten Lichtpulsen bestimmt. Mit dem Photonenzählmodul 17 können einzelne Photonen gezählt werden. Schließlich ist ein Oversampling-Modul 18 vorgesehen, mit dem eine Oversampling-Analyse des Signals vorgenommen werden kann. Zusätzlich kann auch eine einfache Integration vorgenommen werden. Diese kann aber auch mit einem weiteren Modul zur odd-even-Integration durchgeführt werden. Die von den Auswertemodulen 15 bis 18 erzeugten Ergebnissignale werden an ein FPGA 19 übermittelt. Dort stehen sie auf Abruf zur Verfügung. Welche Signale abgerufen und zur Weiterverarbeitung und Auswertung weitergeleitet werden, wird anhand eines Auswahlkriteriums entschieden, welches dem FPGA 19 über eine LVDS-Schnittstelle 20 durch eine Steuereinheit 21 übermittelt wird. Die Steuereinheit 21 kann in das LSM integriert sein, im hier gezeigten Beispiel handelt es sich um einen externen PC. Das Auswahlkriterium wird anhand der Untersuchungsmethode oder per Hand vorgegeben, und das FPGA 19 wird entsprechend programmiert bzw. ändert es seine Schaltung aufgrund des Signals mit dem Auswahlkriterium. Im vorliegenden Fall möchte ein Benutzer eine Fluoreszenzlebensdauermessung durchführen, dementsprechend wurde automatisch das Auswahlkriterium vorgegeben und nur das Ergebnissignal, welches durch das FLIM-Modul 15 erzeugt wurde, wird über die LVDS-Schnittstelle 20 ausgegeben.

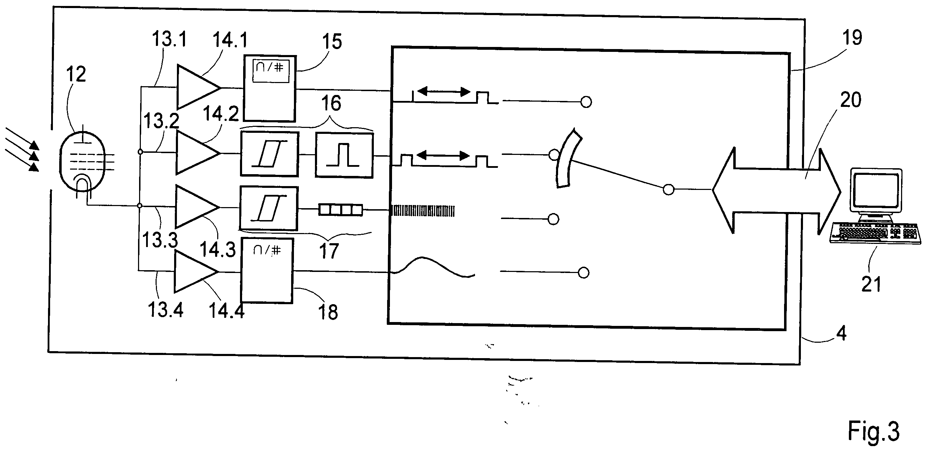

In Fig.3 ist das Detektormodul gezeigt, wie es für eine FCS-Messung eingestellt wäre. Nur das Signal aus Auswertekanal 13.2 mit dem FCS-Modul 16 wird weitergeleitet.

Das in den Fig. 2 und 3 gezeigte Detektormodul ist nur beispielhaft zu verstehen, es kann auch bei entsprechender Vorgabe des Auswahlkriteriums jeweils ein Ergebnissignal aus verschiedenen der Auswertemodule 15 bis 18 weitergeleitet und ausgegeben werden. Außerdem kann auch zeitlich im Verlauf der Messung zwischen verschiedenen Meßverfahren gewechselt werden. Dazu wird dem FPGA 19 entweder in vorgegebenen zeitlichen Abständen ein neues Auswahlkriterium übermittelt, oder aber das anfangs übermittelte Auswahlkriterium enthält eine solche Anweisung für den zeitlichen Wechsel, der dann automatisch abläuft.

### Bezugszeichenliste

- 1: Lichtquellenmodul
- 2: Scanmodul
- 3: Mikroskopmodul
- 4: Detektormodul
- 5, 6: Laser
- 7: Lichtleitfaser
- 8: Strahlformungseinheit
- 9: Beleuchtungseinheit
- 10: Probe
- 11: Hauptfarbteiler
- 12: Pentodenröhre
- 13.1, ..., 13.4: Auswertekanäle
- 14.1, ..., 14.4: Verstärker
- 15: FLIM-Modul
- 16: FCS-Modul
- 17: Photonenzähl-Modul
- 18: Oversampling-Modul
- 19: FPGA
- 20: LVDS-Schnittstelle
- 21: Steuereinheit

## Patentansprüche

1. Verfahren zur Detektierung und Auswertung von Lichtsignalen eines Mikroskops, bei dem in einem Detektormodul (4),
gebildet durch einen optoelektronischen Wandler zur Umwandlung eines Lichtsignals in ein elektrisches Signal, daran angeschlossen eine Aufteilschaltung zur Aufteilung des elektrischen Signals auf mehrere Auswertekanäle (13.1, ..., 13.4), in jedem der Auswertekanäle (13.1, ..., 13.4) ein Auswertungsmodul (15, 16, 17, 18), das zur Durchführung (i) einer Signalauswertung, die von den Signalauswertungen für die anderen Auswertekanäle (13.1, ..., 13.4) verschieden ist, und (ii) zur Erzeugung eines Ergebnissignals ausgebildet ist und in dem Detektormodul (4) eine Auswahleinheit mit einer ansteuerbaren Anwahlschaltung in Form eines programmierbaren FPGA (19) vorgesehen ist, in der ein Ergebnissignal zur Weiterverarbeitung anhand eines vorgegebenen, variabel einstellbaren Auswahlkriteriums auswählbar und ausgebbar ist und wobei das Detektormodul (4) eine einzige bidirektionale Schnittstelle in Form einer LVDS-Schnittstelle (20) aufweist und über die einzige bidirektionale Schnittstelle mit einer Steuereinheit (21) verbunden ist, und die LVDS-Schnittstelle (20) zur Ausgabe des Ergebnissignals sowie zur Übermittlung des Auswahlkriteriums an die Auswahlschaltung dient,
- ein Lichtsignal auf einen optoelektronischen Wandler trifft, wo es in ein elektrisches Signal umgewandelt wird,
- das elektrische Signal im Anschluß an die Umwandlung auf mehrere Auswertekanäle (13.1,...,13.4) aufgeteilt wird, wobei in jedem Auswertekanal (13.1,...,13.4)
(i) eine Signalauswertung durchgeführt wird, die von den Signalauswertungen für die anderen Auswertekanäle (13.1,...,13.4) verschieden ist, und
(ii) ein Ergebnissignal erzeugt wird, wobei als Signalauswertung eine Oversampling-Auswertung, eine FCS-Auswertung (fluoreszenz-korrelationsspektroskopische Messung), eine Photonenzähl-Auswertung und eine FLIM-Auswertung (Fluoreszenz-Lebensdauer-Messung) erfolgt und in dem Detektormodul (4) ein Ergebnissignal zur Weiterverarbeitung anhand des_vorgegebenen, variabel einstellbaren Auswahlkriteriums ausgewählt und ausgegeben wird.

2. Verfahren nach Anspruch 1, **dadurch gekennzeichnet, daß** die elektrischen Signale nach der Aufteilung auf mehrere Auswertekanäle (13.1,...,13.4) individuell verstärkt und/oder gefiltert werden.

3. Verfahren nach einem der vorgenannten Ansprüche, **dadurch gekennzeichnet, daß** die Ergebnissignale anhand des Auswahlkriteriums automatisch ausgewählt werden.

4. Verfahren nach einem der vorgenannten Ansprüche, **dadurch gekennzeichnet, daß** von einer laser-scan-mikroskopisch untersuchten Probe (10) kommendes Licht detektiert wird.

5. Verfahren nach Anspruch 4, **dadurch gekennzeichnet, daß** die Festlegung des Auswahlkriteriums und die Auswahl der Ergebnissignale in Abhängigkeit von einer oder mehreren eingestellten Untersuchungsmethoden erfolgt.

6. Verfahren nach einem der vorgenannten Ansprüche, **dadurch gekennzeichnet, daß** als Signalauswertung mindestens eine Integrations-Auswertung erfolgt.

7. Verfahren nach einem der vorgenannten Ansprüche, **dadurch gekennzeichnet, daß** als optoelektronischer Wandler eine Photomultiplier-Röhre (PMT) verwendet wird.

8. Detektormodul (4) zur Detektierung und Auswertung von Lichtsignalen eines Mikroskops, gebildet durch
- einen optoelektronischen Wandler zur Umwandlung eines Lichtsignals in ein elektrisches Signal,
- daran angeschlossen eine Aufteilschaltung zur Aufteilung des elektrischen Signals auf mehrere Auswertekanäle (13.1,...,13.4),
- in jedem der Auswertekanäle (13.1,...,13.4) ein Auswertungsmodul, welches
(i) eine Signalauswertung durchführt, die von den Signalauswertungen für die anderen Auswertekanäle (13.1,...,13.4) verschieden ist, und
(ii) ein Ergebnissignal erzeugt,
**dadurch gekennzeichnet, daß**
- als Auswertemodule (15, 16, 17, 18) ein Oversampling-Modul (18), ein FCS-Modul (16), ein Photonenzähl-Modul (17), und ein FLIM-Modul (15) vorhanden sind,
- in dem Detektormodul (4) eine Auswahleinheit vorgesehen ist, in der ein Ergebnissignale zur Weiterverarbeitung anhand eines vorgegebenen, variabel einstellbaren Auswahlkriteriums ausgewählt und ausgegeben wird,
- bei der Auswahleinheit eine ansteuerbare Auswahlschaltung vorgesehen ist, mit der die Ergebnissignale ausgewählt werden, wobei die Auswahlschaltung als FPGA (19) ausgestaltet ist und
- bei der Auswahleinheit eine einzige bidirektionale Schnittstelle in Form einer LVDS-Schnittstelle (20) (low-voltage-differential-signaling) zur Ausgabe des ausgewählten Ergebnissignals sowie zur Übermittlung des Auswahlkriteriums an die Auswahleinheit vorhanden ist.

9. Detektormodul (4) nach Anspruch 8, **dadurch gekennzeichnet, daß** für einen oder mehrere der Auswertekanäle (13.1,...,13.4) individuell einstellbare Signalverstärker (14.1,...,14.4) und/oder Frequenzfilter vorgesehen sind.

10. Detektormodul (4) nach einem der Ansprüche 8 oder 9, **dadurch gekennzeichnet, daß** als optoelektronischer Wandler eine Photomultiplier-Röhre (PMT) vorgesehen ist.

11. Detektormodul (4) nach einem der Ansprüche 8 bis 10, **dadurch gekennzeichnet, daß** als ein weiteres Auswertemodul ein Integrations-Modulvorgesehen ist.

12. Laser-Scanning-Mikroskop mit einer Steuereinheit (21) zur Einstellung und Auswahl einer oder mehrerer Untersuchungsmethoden zur Untersuchung einer Probe (10), mit einem Detektormodul (4) nach einem der Ansprüche 8 bis 11.

## Claims

1. Method for detecting and evaluating light signals of a microscope, wherein in a detector module (4), formed by an optoelectronic transducer for converting a light signal into an electrical signal, connected thereto a dividing circuit for dividing the electrical signal among a plurality of evaluation channels (13.1, ..., 13.4), in each of the evaluation channels (13.1, ..., 13.4) an evaluation module (15, 16, 17, 18) configured for carrying out (i) a signal evaluation that is different from the signal evaluations for the other evaluation channels (13.1, ..., 13.4), and (ii) for generating a result signal, and in the detector module (4) provision is made of a selection unit having a drivable selection circuit in the form of a programmable FPGA (19), in which a result signal is able to be selected and output for further processing on the basis of a predefined, variably adjustable selection criterion, and wherein the detector module (4) has a single bidirectional interface in the form of an LVDS interface (20) and is connected to a control unit (21) via the single bidirectional interface, and the LVDS interface (20) serves for outputting the result signal and for communicating the selection criterion to the selection circuit,
- a light signal impinges on an optoelectronic transducer, where it is converted into an electrical signal,
- the electrical signal, after the conversion, is divided among a plurality of evaluation channels (13.1, ..., 13.4), wherein in each evaluation channel (13.1, ..., 13.4)
(i) a signal evaluation is carried out which is different from the signal evaluations for the other evaluation channels (13.1, ..., 13.4), and
(ii) a result signal is generated, wherein an oversampling evaluation, an FCS evaluation (fluorescence correlation spectroscopy measurement), a photon counting evaluation and an FLIM evaluation (fluorescence lifetime measurement) are carried out as signal evaluation,
and in the detector module (4) a result signal is selected and output for further processing on the basis of the predefined, variably adjustable selection criterion.

2. Method according to Claim 1, **characterized in that** the electrical signals are individually amplified and/or filtered after being divided among a plurality of evaluation channels (13.1, ..., 13.4).

3. Method according to either of the preceding claims, **characterized in that** the result signals are selected automatically on the basis of the selection criterion.

4. Method according to any of the preceding claims, **characterized in that** light coming from a sample (10) examined by laser scanning microscopy is detected.

5. Method according to Claim 4, **characterized in that** the definition of the selection criterion and the selection of the result signals are carried out depending on one or more examination methods set.

6. Method according to any of the preceding claims, **characterized in that** at least one integration evaluation is carried out as signal evaluation.

7. Method according to any of the preceding claims, **characterized in that** a photomultiplier tube (PMT) is used as optoelectronic transducer.

8. Detector module (4) for detecting and evaluating light signals of a microscope, formed by
- an optoelectronic transducer for converting a light signal into an electrical signal,
- connected thereto a dividing circuit for dividing the electrical signal among a plurality of evaluation channels (13.1, ..., 13.4),
- in each of the evaluation channels (13.1, ..., 13.4) an evaluation module which
(i) carries out a signal evaluation which is different from the signal evaluations for the other evaluation channels (13.1, ..., 13.4), and
(ii) generates a result signal,
**characterized in that**
- an oversampling module (18), an FCS module (16), a photon counting module (17) and an FLIM module (15) are present as evaluation modules (15, 16, 17, 18),
- in the detector module (4) a selection unit is provided, in which a result signal is selected and output for further processing on the basis of a predefined, variably adjustable selection criterion,
- at the selection unit a drivable selection circuit is provided, by which the result signals are selected, wherein the selection circuit is configured as an FPGA (19), and
- at the selection unit there is present a single bidirectional interface in the form of an LVDS interface (20) (low-voltage differential signalling) for outputting the selected result signal and for communicating the selection criterion to the selection unit.

9. Detector module (4) according to Claim 8, **characterized in that** individually adjustable signal amplifiers (14.1, ..., 14.4) and/or frequency filters are provided for one or more of the evaluation channels (13.1, ..., 13.4).

10. Detector module (4) according to either of Claims 8 and 9, **characterized in that** a photomultiplier tube (PMT) is provided as optoelectronic transducer.

11. Detector module (4) according to any of Claims 8 to 10, **characterized in that** an integration module is provided as a further evaluation module.

12. Laser scanning microscope comprising a control unit (21) for setting and selecting one or more examination methods for examining a sample (10), comprising a detector module (4) according to any of Claims 8 to 11.

## Revendications

1. Procédé de détection et d'évaluation de signaux lumineux d'un microscope, dans lequel, dans un module détecteur (4),
constitué d'un convertisseur optoélectronique destiné à convertir un signal lumineux en un signal électrique,
d'un circuit de division relié à celui-ci et destiné à diviser le signal électrique en plusieurs canaux d'évaluation (13.1, ..., 13.4), d'un module d'évaluation (15, 16, 17, 18), dans chaque canal d'évaluation (13.1, ..., 13.4), qui est conçu (i) pour effectuer une évaluation de signal, qui diffère des évaluations de signal concernant les autres canaux d'évaluation (13.1, ..., 13.4), et (ii) pour générer un signal de résultat, et une unité de sélection comportant un circuit de sélection commandable sous la forme d'un FPGA programmable (19) est prévue dans le module détecteur (4), dans laquelle un signal de résultat peut être sélectionné et délivré en vue d'un traitement ultérieur sur la base d'un critère de sélection prédéterminé réglable de manière variable, et dans lequel le module détecteur (4) présente une interface bidirectionnelle unique sous la forme d'une interface LVDS (20) et est relié à une unité de commande (21) par l'intermédiaire de l'interface bidirectionnelle unique, et l'interface LVDS (20) sert à délivrer le signal de résultat et à transmettre le critère de sélection au circuit de sélection,
- un signal lumineux est incident sur un convertisseur optoélectronique où il est converti en un signal électrique,
- le signal électrique est divisé en plusieurs canaux d'évaluation (13.1, ..., 13.4) après la conversion, de manière à ce que, dans chaque canal d'évaluation (13.1, ..., 13.4),
(i) une évaluation de signal, qui est différente des évaluations de signal concernant les autres canaux d'évaluation (13.1, ... ,13.4), soit effectuée, et
(ii) un signal de résultat soit généré, dans lequel une évaluation par suréchantillonnage, une évaluation FCS (mesure spectroscopique de corrélation de fluorescence), une évaluation du nombre de photons et une évaluation FLIM (mesure de durée de vie de la fluorescence) soient effectuées, et
un signal de résultat est sélectionné et délivré dans le module détecteur (4) en vue d'un traitement ultérieur sur la base du critère de sélection prédéterminé et réglable de manière variable.

2. Procédé selon la revendication 1, **caractérisé en ce que** les signaux électriques sont amplifiés et/ou filtrés individuellement après la division en plusieurs canaux d'évaluation (13.1, ..., 13.4).

3. Procédé selon l'une des revendications précédentes, **caractérisé en ce que** les signaux de résultat sont automatiquement sélectionnés sur la base du critère de sélection.

4. Procédé selon l'une des revendications précédentes, **caractérisé en ce que** la lumière provenant d'un échantillon (10) examiné par microscopie à balayage laser est détectée.

5. Procédé selon la revendication 4, **caractérisé en ce que** la détermination du critère de sélection et la sélection des signaux de résultat sont effectuées en fonction d'une ou de plusieurs méthodes d'examen définies.

6. Procédé selon l'une des revendications précédentes, **caractérisé en ce qu'**au moins une évaluation par intégration est effectuée en tant qu'évaluation de signal.

7. Procédé selon l'une des revendications précédentes, **caractérisé en ce qu'**un tube photomultiplicateur (PMT) est utilisé en tant que convertisseur optoélectronique.

8. Module détecteur (4) destiné à détecter et à évaluer des signaux lumineux d'un microscope, formé par
- un convertisseur optoélectronique destiné à convertir un signal lumineux en un signal électrique,
- un circuit de division destiné à diviser le signal électrique en plusieurs canaux d'évaluation (13.1, ..., 13.4),
- dans chacun des canaux d'évaluation (13.1, ..., 13.4), un module d'évaluation qui
(i) effectue une évaluation de signal qui est différente des évaluations de signal concernant les autres canaux d'évaluation (13.1, ..., 13.4), et
(ii) génère un signal de résultat,
**caractérisé en ce que**
- il est prévu en tant que modules d'évaluation (15, 16, 17, 18), un module de suréchantillonnage (18), un module FCS (16), un module de comptage de photons (17) et un module FLIM (15)
- il est prévu dans le module détecteur (4) une unité de sélection dans laquelle un signal de résultat est sélectionné et délivré en vue d'un traitement ultérieur sur la base d'un critère de sélection prédéterminé et réglable de manière variable,
- il est prévu dans l'unité de sélection un circuit de sélection commandable au moyen duquel les signaux de résultat sont sélectionnés, dans lequel le circuit de sélection est réalisé sous la forme d'un FPGA (19) et
- il est prévu dans l'unité de sélection une interface bidirectionnelle unique sous la forme d'une interface LVDS (signalisation différentielle basse tension) (20) destinée à délivrer le signal de résultat sélectionné et à transmettre le critère de sélection à l'unité de sélection.

9. Module détecteur (4) selon la revendication 8, **caractérisé en ce qu'**il est prévu pour un ou plusieurs des canaux d'évaluation (13.1, ..., 13.4) des amplificateurs de signaux (14.1, ..., 14.4) et/ou des filtres de fréquence réglables individuellement.

10. Module détecteur (4) selon l'une des revendications 8 ou 9, **caractérisé en ce qu'**il est prévu en tant que convertisseur optoélectronique un tube photomultiplicateur (PMT).

11. Module détecteur (4) selon l'une des revendications 8 à 10, **caractérisé en ce qu'**il est prévu en tant que module d'évaluation supplémentaire un module d'intégration.

12. Microscope à balayage laser comportant une unité de commande (21) destinée à régler et à sélectionner une ou plusieurs méthodes d'examen pour l'examen d'un échantillon (10), comprenant un module détecteur (4) selon l'une des revendications 8 à 11.
